# FASCICULE DE BREVET EUROPEEN

(11) **EP 1 517 552 B1**
(45) Date de publication et mention de la délivrance du brevet: **22.10.2008**
(21) Numéro de dépôt: 04292095.9
(22) Date de dépôt: 27.08.2004
(51) Int. Cl.: H04N 5/782

(54) **Procédé et système de programmation d'enregistrements par transmission SMS-CB et équipement terminal de programmation**
Verfahren und System zur Aufnahmeprogrammierung mittels SMS-CB Übertragung und Programmierungsendgerät
Recording programming procedure and system by SMS-CB transmission and programming terminal equipment

(30) Priorité: 01.09.2003 FR 0310362
(43) Date de publication de la demande: 23.03.2005
(73) Titulaire: Société Française du Radiotéléphone-SFR, 75008 Paris (FR)
(72) Inventeur: Faisy, Christian, 91400 Saint Denis de la Reunion (FR)
(74) Mandataire: Debay, Yves

(56) Documents cités:
- FR-A- 2 716 327

## Description

La présente invention se rapporte au domaine de la programmation d'enregistrements. L'invention concerne plus particulièrement un procédé et un système de programmation d'enregistrements par transmission SMS-CB (Short Message Service - Cell Broadcast) ainsi qu'un équipement terminal de programmation d'un enregistreur de supports d'information vidéo.

Il est connu dans l'art antérieur l'établissement d'un catalogue de programmes sur des pages télétexte. Un curseur permet de sélectionner un programme à enregistrer, lequel est pourvu d'un code de programmation. Lorsque ultérieurement, un code de programmation en temps réel qui est transmis par le canal de télévision correspond à une information de programmation qui a été mémorisée, le magnétoscope est déclenché. Ce système présente l'inconvénient que l'information concernant les programmes de télévision est transmise par un service télétexte lié à un canal de télévision d'où une capacité limitée.

Il en découle que le service fourni ne peut concerner qu'un nombre limité de diffuseurs de programmes. De plus, chaque canal est obligé de diffuser le service, ce qui génère une redondance importante qui est particulièrement préjudiciable pour une ressource télétexte qui est limitée.

Il est également connu du document WO 90/07844 un procédé de programmation commercialisé sous la marque SHOWVIEW et qui utilise un code comprimé contenant les informations sur le canal, la date et l'heure des programmes. Ces codes sont publiés dans des magazines et sont introduits manuellement dans un dispositif de commande par un utilisateur pour permettre l'enregistrement des programmes sélectionnés. Un inconvénient de ce procédé est qu'il n'est pas adapté pour enregistrer des programmes réactualisés. En outre, la programmation ne peut pas être réalisée par genre d'émission mais uniquement programme par programme. Il est en effet nécessaire pour l'utilisateur de consulter son programme TV avant d'introduire le code comprimé.

Il est décrit dans le brevet FR 2 716 327 un procédé de programmation d'enregistrements permettant de mémoriser dans un terminal doté d'un récepteur radio une grille de programmes TV diffusée par voie radio depuis un serveur. La voie radio utilisée est du type RDS-FM (Radio Data System - Frequency Modulation) ou analogue. Cependant ce procédé ne permet pas une programmation par catégorie ou genre d'émission. Là encore, il est nécessaire pour l'utilisateur de consulter une grille des programmes pour pouvoir sélectionner ensuite ce qu'il veut enregistrer.

La présente invention a donc pour objet de supprimer un ou plusieurs des inconvénients de l'art antérieur en définissant un procédé de programmation d'enregistrements par télédéclenchement d'un dispositif enregistreur, en utilisant la technologie SMS dite "Cell Broadcast" de transmission par cellule radio d'au moins un réseau de radiotéléphonie mobile.

Cette technologie permet notamment d'envoyer en temps réel un ou plusieurs messages texte SMS à tous les téléphones mobiles situés à l'intérieur d'une zone déterminée couverte par une ou plusieurs cellules radio, au travers de canaux de diffusion dédiés. C'est le canal descendant CBCH (Cell Broadcast Channel), utilisé notamment pour la diffusion de messages courts spécifiques (météo, informations routières, etc.) vers les téléphones mobiles, qui permet l'envoi en masse des messages. Un maximum de 93 caractères peut être contenu dans le message "Cell Broadcast", mais il est possible d'enchaîner jusqu'à 15 messages pour former un macro-message. Un objet de l'invention est de proposer un procédé pour transmettre vers un dispositif enregistreur sur le canal radio CBCH des données représentatives de programmes de télévision et intégrées dans des messages "SMS-CB".

A cet effet, l'invention concerne un procédé de programmation d'enregistrements pour un dispositif enregistreur contenant un support capable d'enregistrer des informations vidéo et relié à un équipement terminal de programmation situé dans une zone déterminée couverte par une ou plusieurs cellules radio d'au moins un réseau de radiotéléphonie mobile, procédé caractérisé en ce qu'il comporte les étapes suivantes :
- une première étape de programmation réalisée par un utilisateur comprenant la saisie d'au moins un type de programme à enregistrer à l'aide d'une interface de saisie du dispositif enregistreur reliée à l'équipement terminal, le type de programme étant encodé avec un format déterminé en un code d'enregistrement par des moyens de codage de l'équipement terminal de programmation ;
- une étape de mémorisation du code d'enregistrement dans des moyens de stockage de l'équipement terminal de programmation ;
- une étape de réception, par des moyens de réception et de lecture de l'équipement terminal, de données codées représentatives d'un planning de programmation d'éléments de programme d'une pluralité de diffuseurs de programmes et d'informations d'identification desdits éléments de programme, transmises sur au moins un canal de diffusion du réseau de radiotéléphonie mobile à l'intérieur de ladite zone déterminée dans des messages texte, chacun des éléments de programme étant défini par au moins une séquence de concaténation comprenant au moins une première partie codée avec le format du code d'enregistrement et une seconde partie complémentaire ;
- une étape de détection d'au moins un élément de programme désiré, consistant à discriminer parmi la pluralité de premières parties codées au moins une première partie similaire au code d'enregistrement ;
- une deuxième étape de programmation réalisée automatiquement par l'équipement terminal, utilisant la première partie discriminée et/ou sa seconde partie complémentaire pour paramétrer dans le dispositif enregistreur l'enregistrement de l'élément de programme détecté.

L'invention permet ainsi de paramétrer précisément l'enregistrement sans que l'utilisateur n'ait forcément à connaître précisément l'ensemble des paramètres d'enregistrement tels que l'horaire de début et de fin d'un élément de programme.

Selon une autre particularité, la saisie par l'utilisateur du type de programme forme une séquence concaténant notamment les données suivantes :
- des données représentatives d'une catégorie d'élément de programme comprenant une chaîne d'au moins trois caractères,
- des données représentatives d'un genre d'élément de programme comprenant une chaîne d'au moins deux caractères,
- des données représentatives d'un sous-genre d'élément de programme comprenant une chaîne d'au moins deux caractères.

Selon une autre particularité, la séquence formée lors de la saisie par l'utilisateur du type de programme comprend en outre des données représentatives d'un canal de diffusion d'un diffuseur de programmes formées avec au moins deux caractères.

Selon une autre particularité de l'invention, la première partie codée des données d'un élément de programme comprend des données représentatives d'une catégorie, d'un genre, d'un sous-genre d'élément de programme, et d'un canal de diffusion d'un diffuseur de programmes, la deuxième partie complémentaire comprenant des données représentatives d'une date, d'un horaire de début et de fin de la diffusion de l'élément de programme.

Selon une autre particularité de l'invention, les données codées sont transmises depuis un serveur connecté à au moins un réseau de radiotéléphonie mobile et diffusées dans des messages texte de type SMS-CB sur un canal descendant de diffusion CBCH dudit réseau.

L'invention permet ainsi de fournir les données de renseignement nécessaires à la programmation d'un enregistrement à une pluralité de dispositifs enregistreurs situés à l'intérieur d'une zone déterminée couverte par exemple par une cellule radio, au travers d'un canal de diffusion dédié.

Selon une autre particularité de l'invention, l'étape de détection comprend la discrimination de l'ensemble formé par les première et seconde parties.

Selon une autre particularité de l'invention, une étape de blocage d'accès au canal de diffusion du réseau de radiotéléphonie mobile est réalisée d'une part par identification dans l'équipement terminal de programmation d'un module d'identité constitué d'une carte à puce de type SIM ou USIM pour réseaux de deuxième ou troisième génération ou une carte équivalente comportant dans une mémoire des données paramétrables d'autorisation d'accès audit canal de diffusion, et d'autre part par modification desdites données d'autorisation d'accès.

Selon une autre particularité, le procédé selon l'invention comporte une étape de cryptage des données transmises sur le canal de diffusion CBCH et de décryptage de ces données par les moyens de réception et lecture de l'équipement terminal.

Selon une autre particularité, la première étape de programmation comprend en outre la saisie d'une plage horaire d'enregistrement.

Selon une autre particularité, la première étape de programmation comprend une mise en priorité d'au moins une caractéristique relative au type de programme à enregistrer.

Selon une autre particularité, les codes d'enregistrements programmés stockés dans l'équipement terminal de programmation sont envoyés sur un canal SMS du réseau de radiotéléphonie mobile, vers une base de données de connaissance à usage statistique.

L'invention a également pour objet de proposer un système de programmation d'enregistrements permettant de supprimer les inconvénients de l'art antérieur.

A cet effet, l'invention concerne un système de programmation d'enregistrements pour un dispositif enregistreur contenant un support capable d'enregistrer des informations vidéo et relié à un équipement terminal de programmation, caractérisé en ce qu'il comporte un serveur comprenant des moyens de mémorisation pour stocker une base de données codées représentatives d'un planning de programmation d'éléments de programme d'une pluralité de diffuseurs de programmes et d'informations d'identification desdits éléments de programme, le serveur comprenant également des moyens de connexion à au moins un réseau de radiotéléphonie mobile pour diffuser dans au moins un message texte des données codées de ladite base de données sur au moins un canal de diffusion du réseau, ledit équipement terminal comprenant des moyens de réception et lecture pour lire les messages texte transmis sur ledit canal diffusant les données codées du serveur, chacun des éléments de programme étant défini par au moins une séquence de concaténation codée par un système de transformation de référence et formant une première partie codée avec un format déterminé et une seconde partie complémentaire ; et en ce que le dispositif enregistreur comprend une interface de saisie reliée à l'équipement terminal pour permettre à l'utilisateur de rentrer un type de programme à enregistrer, l'équipement terminal comportant des moyens de codage pour encoder le type de programme avec ledit format déterminé en un code d'enregistrement et des moyens de stockage pour mémoriser le code d'enregistrement, des moyens de traitement de l'équipement terminal comprenant un module de discrimination pour détecter au moins un élément de programme désiré par comparaison d'au moins une première partie de chacune des séquences de concaténation des messages texte avec le code d'enregistrement et des moyens de paramétrage automatique utilisant la première partie discriminée et/ou sa seconde partie complémentaire pour paramétrer dans le dispositif enregistreur l'enregistrement de l'élément de programme détecté.

Selon une autre particularité, le réseau de radiotéléphonie mobile comprend un sous-système radio relié au serveur et à au moins un canal descendant de diffusion CBCH dudit réseau pour diffuser les données de ladite base de données dans au moins un message texte de type SMS-CB dans une zone déterminée couverte par une ou plusieurs cellules radio du réseau.

Selon une autre particularité de l'invention, la base de données comporte des données codées d'élément de programme ayant une première partie codée contenant des informations représentatives d'une catégorie, d'un genre, d'un sous-genre d'élément de programme, d'un canal de diffusion d'un diffuseur de programmes, et une deuxième partie complémentaire contenant des informations représentatives d'une date, d'un horaire de début et de fin de la diffusion de l'élément de programme.

Selon une autre particularité, ledit format déterminé comprend une séquence concaténant notamment des données représentatives de catégorie, de genre et de sous-genre d'un élément de programme, ainsi que des données représentatives d'un canal de diffusion d'un diffuseur de programmes.

Selon une autre particularité, l'équipement terminal de programmation comporte un module d'identité constitué d'une carte à puce de type SIM ou USIM pour réseaux de deuxième ou troisième génération ou une carte équivalente comportant dans une mémoire des données paramétrables d'autorisation d'accès audit canal de diffusion du réseau.

Selon une autre particularité, les moyens de réception et lecture comportent une antenne d'émission/réception permettant d'envoyer les codes d'enregistrements sur un canal SMS du réseau, le serveur comprenant des moyens de stockage et d'indexation des codes d'enregistrements de programmes émis par les équipements terminaux de programmation.

Selon une autre particularité, le serveur comprend des moyens de cryptage/décryptage pour permettre le cryptage des données à émettre sur le réseau, tandis que l'équipement terminal de programmation comprend des moyens de décryptage de ces données et de cryptage pour l'envoi des codes d'enregistrements vers les moyens de stockage et d'indexation du serveur.

L'invention a également pour objet de proposer un équipement terminal de programmation d'enregistrements effectués par un dispositif enregistreur, permettant de réceptionner des messages texte émis dans un réseau de radiotéléphonie mobile.

A cet effet, l'invention concerne un équipement terminal de programmation destiné à programmer au moins un déclenchement d'un dispositif enregistreur pour enregistrer une émission diffusée sur le canal de diffusion d'un diffuseur de programmes, comprenant des moyens de traitement et des moyens de stockage, caractérisé en ce qu'il comporte :
- des moyens de réception et de lecture aptes à recevoir des messages texte transmis sur au moins un canal de diffusion d'un réseau de radiotéléphonie mobile et lire une pluralité de séquences de concaténation contenues dans les messages texte, chacune représentative d'une identification et d'un planning de programmation d'un élément de programme d'un diffuseur de programmes ;
- des moyens de connexion à une interface de saisie du dispositif enregistreur permettant à l'utilisateur de choisir un type de programme à enregistrer ;
- des moyens de codage pour encoder le type de programme choisi avec un format déterminé en un code d'enregistrement, lesdits moyens de stockage mémorisant le code d'enregistrement ;
- un module de discrimination dans les moyens de traitement pour détecter un élément de programme à enregistrer par identification, parmi la pluralité de séquences de concaténation lues par les moyens de réception et de lecture, d'au moins une partie codée avec ledit format déterminé dans une séquence de concaténation et comparaison de cette partie codée avec le code d'enregistrement ;
- des moyens de paramétrage automatique utilisant la partie codée discriminée et/ou une partie complémentaire dans la même séquence de concaténation pour paramétrer dans le dispositif enregistreur le début et la fin de l'enregistrement ainsi que le canal de diffusion de l'élément de programme détecté par le module de discrimination.

Selon une autre particularité, les moyens de réception et lecture comprennent une antenne d'émission/réception compatible avec un réseau de radiotéléphonie mobile GSM, GRPS, UMTS, etc.. ou analogue et des moyens d'accès à un canal descendant de diffusion CBCH dudit réseau pour permettre la lecture d'au moins un message texte de type SMS-CB d'une part, et des moyens d'accès aux canaux SMS pour permettre l'envoi des codes d'enregistrements vers une base de données de connaissance à usage statistique d'autre part.

Selon une autre particularité, les moyens de réception et de lecture comportent un module d'identité constitué d'une carte à puce de type SIM ou USIM pour réseaux de deuxième ou troisième génération ou une carte équivalente comportant dans une mémoire des données paramétrables d'autorisation d'accès audit canal de diffusion du réseau.

Selon une autre particularité, les moyens de réception et lecture comprennent des moyens de décryptage des séquences de concaténation.

Selon une autre particularité, le module de discrimination comprend des moyens de comparaison de données respectivement représentatives du canal de diffusion, d'une catégorie, et d'au moins une classification par genre de l'élément de programme, les moyens de stockage étant agencés pour stocker dans un registre la séquence de concaténation comprenant une partie codée avec ledit format déterminé dont les données comparées par les moyens de comparaison sont identiques à celles du code d'enregistrement, les moyens de paramétrage automatique étant reliés aux moyens de stockage pour utiliser des données d'enregistrement de la séquence stockée dans ledit registre.

L'invention, avec ses caractéristiques et avantages, ressortira plus clairement à la lecture de la description faite en référence aux dessins annexés donnés à titre d'exemples non limitatifs dans lesquels :
- la figure 1 représente un mode de réalisation du système selon l'invention dans lequel l'équipement terminal est intégré dans le dispositif enregistreur,
- la figure 2 représente de manière schématique la diffusion dans une cellule radio de signaux correspondant à des données d'éléments de programme et destinés à des dispositifs enregistreurs pourvus de l'équipement terminal de programmation selon l'invention,
- la figure 3 représente un exemple de code d'enregistrement,
- la figure 4 représente un exemple de séquence de concaténation formée d'une première partie d'identification et d'une seconde partie relative à la plage horaire de diffusion,
- la figure 5 représente sous forme d'un diagramme un processus de programmation d'un enregistrement selon l'invention.

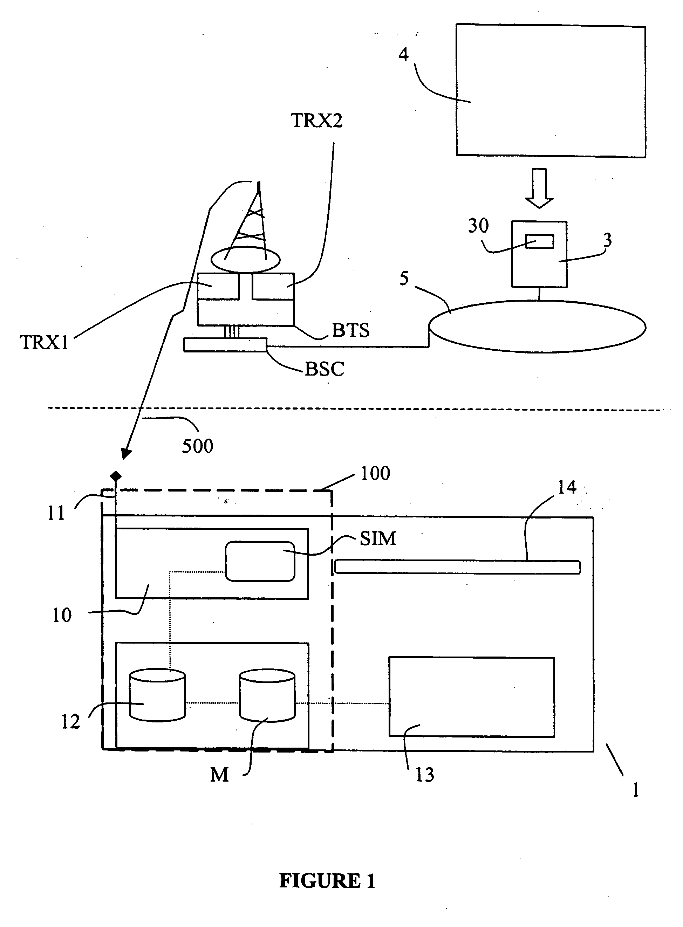

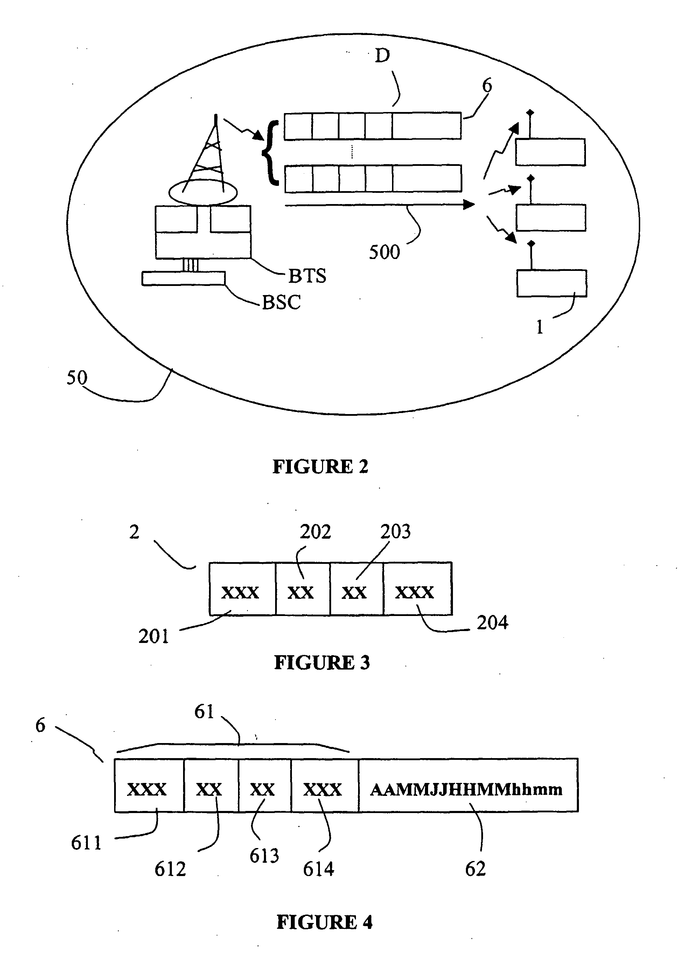

L'invention va être à présent décrite en référence aux figures 1 et 2.

Comme illustré à la figure 1, l'invention propose d'utiliser au moins un réseau (5) de radiotéléphonie mobile et d'intégrer un équipement terminal (100) de programmation dans un dispositif enregistreur (1) tel qu'un magnétoscope ou appareil d'enregistrement de supports DVD (Digital Versatile Disc) ou tout autre appareil à support capable d'enregistrer des informations vidéo (14), de façon à réaliser une programmation à distance d'un ou plusieurs enregistrements d'émissions diffusées sur des canaux de diffusion de diffuseurs de programmes, tels par exemple les chaînes de télévision, et ce sans connaissance préalable des programmes ou des canaux de diffusion.

Dans un mode de réalisation de l'invention, la technologie SMS-CB est déployée dans le réseau (5) de radiotéléphonie mobile sur l'ensemble du sous-système radio "BSS" (Base Station Subsystem) de l'opérateur de télécommunication et des canaux CBCH (Cell Broadcast Channel) sont définis pour permettre l'émission (500) par des dispositifs émetteurs (TRX1, TRX2) des stations de base (BTS) de données vers des dispositifs enregistreurs (1) pourvus d'un équipement terminal (100) de programmation. Chaque station de base (BTS) constitue alors l'interface entre le contrôleur de station de base (BSC) gérant la ressource radio et les équipements terminaux (100). Une antenne (11) d'émission/réception radio et des moyens de réception et lecture (10) de ces données sont intégrés dans ledit équipement terminal (100). L'émission de données est possible par l'intermédiaire de l'antenne (11), des moyens d'émission de données pouvant être intégrés dans l'équipement terminal (100). On comprend que l'infrastructure existante pour le réseau (5) de radiotéléphonie mobile peut permettre la mise en oeuvre de la technologie SMS-CB à destination d'équipements terminaux (100) de programmation considérés comme des émetteurs/récepteurs de téléphones mobiles. L'antenne d'émission/réception est par exemple compatible avec un réseau de radiotéléphonie mobile GSM, GRPS, UMTS, etc... ou analogue et les moyens de réception et lecture (10) comportent des moyens d'accès au canal descendant de diffusion CBCH dudit réseau pour permettre la lecture d'au moins un message texte de type SMS-CB.

Les données émises par le réseau (5), appelées dans ce qui suit données de renseignement (D), sont représentatives d'un planning de programmation d'éléments de programme d'une pluralité de diffuseurs de programmes et d'informations d'identification de ces éléments de programme. Dans le mode de réalisation préféré de l'invention, elles sont transmises dans des messages texte de type SMS-CB, de sorte que plusieurs dispositifs enregistreurs (1) localisés dans une même zone couverte par une ou plusieurs cellules radio (50) du réseau (5) peuvent recevoir les mêmes données transmises dans les messages texte SMS-CB, sur le CBCH défini pour cette zone. La figure 2 représente ainsi une cellule radio (50) dans laquelle une émission radio (500) est réalisée sur le canal CBCH pour diffuser des données de renseignement sur les éléments de programme pouvant être lues par les équipements terminaux (100) des dispositifs enregistreurs (1) situés dans la cellule (50).

Le contenu initial (4) du service peut être fourni par les régies des diffuseurs de programmes, par exemple de télévision, à un serveur (3) doté de moyens de connexion à au moins un réseau de radiotéléphonie mobile. Ce contenu initial (4) comporte des informations de planning de programmation des éléments de programme et des informations d'identification de ces éléments de programme. Le contenu initial (4) est par exemple codé par un système de transformation de référence pour former des données de renseignement (D) agencées en une pluralité de séquences de concaténation (6) qui se rapportent chacune à un élément de programme déterminé. Le serveur (3) comprend des moyens de mémorisation (30) pour stocker une base de données formée avec lesdites données de renseignement (D) ainsi codées. Le serveur (3) relié à au moins un réseau de radiotéléphonie mobile (5) diffuse dans au moins un message texte des données de ladite base de données sur un ou plusieurs canaux de diffusion du réseau (5). Dans le mode de réalisation préféré de l'invention, le sous-système radio du réseau (5) est relié au serveur (3) et à au moins un canal descendant de diffusion CBCH dudit réseau pour permettre l'émission (500) des données codées de renseignement (D) de ladite base de données dans un ou plusieurs messages texte de type SMS-CB, dans une zone déterminée couverte par une ou plusieurs cellules radio (50) du réseau.

Les moyens de réception et lecture (10) de l'équipement terminal (100) de programmation utilisés dans le système de programmation d'enregistrements selon l'invention permettent de lire les messages texte transmis sur le canal diffusant les données codées de renseignement (D) du serveur (3). Le dispositif enregistreur (1) comprend une interface de saisie (13) reliée à l'équipement terminal (100) de programmation pour permettre à l'utilisateur de rentrer un type de programme à enregistrer. L'équipement terminal (100) de programmation peut comporter des moyens de codage (non représentés) pour encoder le type de programme avec un format déterminé analogue au format utilisé par le système de transformation de référence pour coder une partie des informations relatives à un élément de programme.

L'invention va être à présent décrite en référence aux figures 1, 3 et 4.

Selon l'invention, l'utilisateur peut réaliser une programmation thématique d'émission(s) avec l'interface de saisie, les moyens de codage encodant le type de programme désiré en un code d'enregistrement (2) ayant ledit format déterminé. Ce code d'enregistrement (2) est mémorisé dans des moyens de stockage (M) de l'équipement terminal (100) de programmation. Ces moyens de stockage (M) peuvent consister en une mémoire de type RAM (Random Access Memory) ou de type flash ou autre type de mémoire à accès rapide. Dans l'exemple de la figure 3, le code d'enregistrement (2) est constitué d'une séquence concaténant l'ensemble de données suivantes :
- chaîne de trois caractères dans un premier champ pour représenter la catégorie (201) de l'élément de programme ;
- chaîne de deux caractères dans un second champ pour représenter le genre (202) de l'élément de programme ;
- chaîne de deux caractères dans un troisième champ pour représenter le sous-genre (203) de l'élément de programme ;
- chaîne de trois caractères dans un quatrième et dernier champ pour représenter le canal de diffusion d'un diffuseur de programmes (204) de l'élément de programme.

Dans une variante de réalisation, le code d'enregistrement (2) peut ne pas comporter d'informations relatives au canal de diffusion. Dans une autre variante de réalisation, deux caractères suffisent pour représenter le canal de diffusion d'un diffuseur de programmes (204). Naturellement, le nombre de caractères envisagés pour chacun des champs de la séquence peut être plus élevé, par exemple supérieur à trois caractères. Il doit être compris que ledit format déterminé pour le code d'enregistrement (2) comporte une séquence concaténant notamment des données représentatives de catégorie, de genre et éventuellement de sous-genre d'un élément de programme, de sorte qu'il est possible à un utilisateur d'établir une programmation avec l'interface de saisie (13) en ignorant la plage horaire précise de l'élément de programme. Le canal de diffusion peut être ignoré ou non de l'utilisateur. Dans un mode de réalisation de l'invention, un champ non saisi pour le canal de diffusion peut ne pas empêcher la prise en compte de la programmation thématique effectuée par l'utilisateur. Des données permettant de préciser un canal de diffusion d'un diffuseur de programmes peuvent toutefois être comprises dans la séquence formant le code d'enregistrement (2). La programmation ainsi permise par l'invention peut servir pour enregistrer un élément de programme reconnu par sa catégorie, son genre et son sous-genre, par exemple une émission en catégorie sport, dont le genre est le football et le sous-genre est un match de championnat national.

Comme représenté dans le mode de réalisation de la figure 4, les données de renseignement (D) issues de la base de données du serveur (3) peuvent se présenter sous la forme de séquences de concaténation (6) se rapportant aux éléments de programme, chaque séquence étant divisée en deux parties (61, 62). Dans l'exemple nullement limitatif de la figure 4, la première partie (61) est codée par le système de transformation de référence avec un format que l'on retrouve pour l'établissement du code d'enregistrement (2), de sorte que cette première partie (61) est en tout point comparable avec le code d'enregistrement (2). La première partie comporte ainsi un champ avec au moins trois caractères pour indiquer une catégorie (611), un champ avec au moins deux caractères pour indiquer un genre (612), un champ avec au moins deux caractères pour indiquer un sous-genre (613), et un champ avec au moins deux ou trois caractères pour indiquer un canal de diffusion (614). La seconde partie complémentaire (62) comprend une chaîne de caractères permettant d'identifier la plage horaire de l'élément de programme, c'est-à-dire le début et la fin de cet élément de programme. La seconde partie (62) peut ainsi être formée de 14 caractères indiquant par exemple la date avec 6 caractères - 2 pour l'année, 2 pour le mois, 2 pour le jour - et les horaires de débuts et de fins avec 8 caractères - 4 caractères pour l'heure et la minute de début, 4 caractères pour l'heure et la minute de fin. Chacun des éléments de programme peut être défini par une séquence de concaténation (6) telle que celle illustrée à la figure 4 ou par une séquence équivalente contenant une représentation d'informations analogues codée par le système de transformation de référence. Dans un mode de réalisation de l'invention, les moyens de stockage (M) de l'équipement terminal (100) peuvent servir à mémoriser l'ensemble des messages de type SMS-CB.

Comme représenté à la figure 1, l'équipement terminal (100) de programmation dispose de moyens de traitement (12), comme par exemple une unité centrale de traitement, comprenant un module de discrimination pour détecter au moins un élément de programme à enregistrer par comparaison au moins de la première partie (61) de chacune des séquences de concaténation (6) avec le code d'enregistrement (2). Des moyens de paramétrage automatique utilisant la première partie (61) discriminée et/ou sa seconde partie complémentaire (62) sont également prévus dans les moyens de traitement (12) pour paramétrer dans le dispositif enregistreur (1) l'enregistrement de l'élément de programme détecté. Ces moyens de paramétrage automatique permettent de programmer dans le dispositif enregistreur (1) le début et la fin de l'enregistrement ainsi que le canal de diffusion de l'élément de programme détecté par le module de discrimination.

Dans un mode de réalisation de l'invention, le module de discrimination comprend des moyens de comparaison de données respectivement représentatives du canal de diffusion, d'une catégorie, et d'au moins une classification par genre de l'élément de programme. Les moyens de stockage (M) sont agencés pour stocker dans un registre la séquence de concaténation (6) comprenant la partie codée (61) avec ledit format déterminé dont les données comparées par les moyens de comparaison sont identiques à celles du code d'enregistrement (2), les moyens de paramétrage automatique étant reliés aux moyens de stockage (M) pour utiliser les données d'enregistrement de la séquence (6) stockée dans ledit registre.

L'équipement terminal (100) de programmation comporte un module d'identité (SIM) constitué d'une carte à puce de type SIM ou USIM pour réseaux de deuxième ou troisième génération ou une carte équivalente comportant dans une mémoire des données paramétrables d'autorisation d'accès à un canal de diffusion du réseau (5). Ce module d'identité (SIM), intégré dans lesdits moyens de réception et lecture (10), peut permettre de bloquer la réception ou la lecture de données diffusées sur le canal CBCH ou analogue. L'accès au service fournisseur des données de renseignement (D) établi par le réseau (5) par l'intermédiaire du canal CBCH peut donc être bloqué par envoi d'un message destiné au module d'identité (SIM), par exemple dans le cas d'un désabonnement de l'utilisateur à ce service. Dans un mode de réalisation de l'invention, une étape de blocage d'accès au canal de diffusion du réseau (5) de radiotéléphonie mobile est réalisée d'une part par identification dans l'équipement terminal (100) de programmation du module d'identité (SIM), et d'autre part par modification desdites données d'autorisation d'accès.

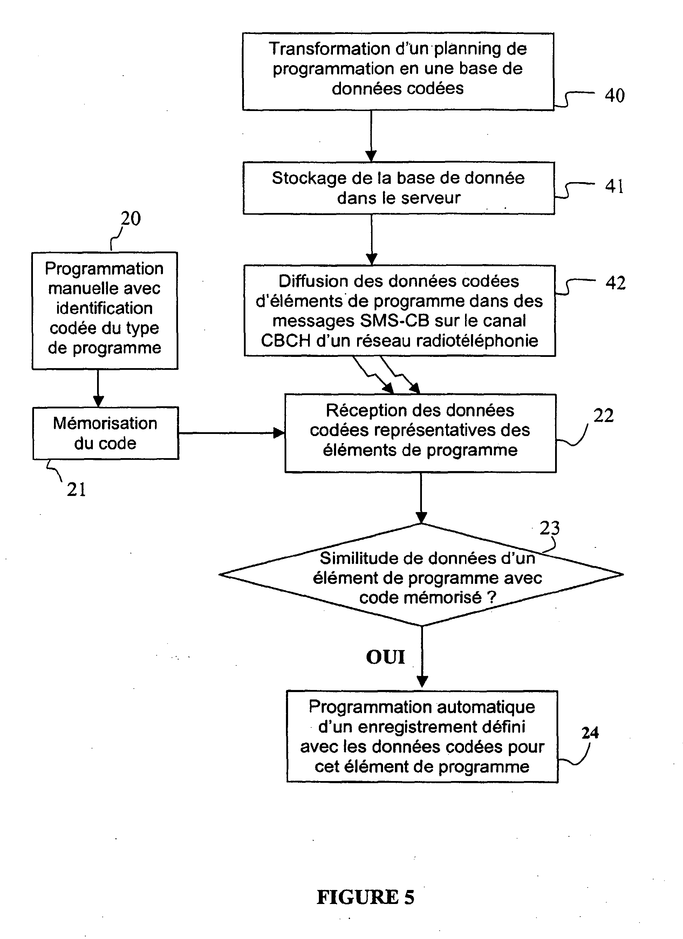

L'invention va être à présent décrite en liaison avec les figures 1 et 5.

Comme représenté à la figure 5, le procédé selon l'invention nécessite une phase (40) de transformation du contenu initial (4) du service, les informations d'identification et de planning de programmation des éléments de programme étant codées en séquences de concaténation (6) et une étape (41) de stockage de ces séquences (6) dans une base de données, dans des moyens de mémorisation (30) du serveur (3).

Dans le mode de réalisation préféré de l'invention, l'utilisateur n'intervient qu'une seule fois dans le processus, lors d'une première étape (20) de programmation comprenant la saisie par l'utilisateur d'au moins un type de programme à enregistrer à l'aide de l'interface de saisie (13) du dispositif enregistreur (1). Il s'ensuit une mémorisation (21) du code d'enregistrement (2) représentatif des instructions d'enregistrement dans les moyens de stockage (M) de l'équipement terminal (100) de programmation.

Le processus de programmation d'enregistrements selon l'invention ne peut ensuite se poursuivre qu'après une étape (22) de réception, par les moyens de réception et lecture (10) de l'équipement terminal (100), des données codées de renseignement (D), transmises sur au moins un canal de diffusion du réseau (5) dans des messages texte. Cette étape (22) de réception permet d'obtenir des séquences de concaténation (6) définissant chacune un des éléments de programme par l'intermédiaire de la première partie codée (61) avec le format du code d'enregistrement (2) et de la seconde partie complémentaire (62). Ces séquences (6) peuvent être mémorisées dans les moyens de stockage (M) de l'équipement terminal (100). Dès lors, une étape (23) de détection d'au moins un élément de programme désiré est réalisée par la discrimination parmi la pluralité de premières parties codées (61) d'au moins une première partie similaire au code d'enregistrement (2). Cette étape (23) de détection permet ainsi d'identifier la séquence (6) comprenant la partie codée (61) discriminée et de déclencher une deuxième étape (24) de programmation réalisée automatiquement par l'équipement terminal (100). La première partie discriminée et/ou sa seconde partie complémentaire est alors utilisée pour paramétrer dans le dispositif enregistreur (1) l'enregistrement de l'élément de programme détecté. Si aucune des séquences de concaténation (6) réceptionnées ne comporte une première partie codée similaire au code d'enregistrement (2), l'étape de détection (23) aboutit à la conservation du code d'enregistrement dans l'attente d'une nouvelle étape (22) de réception de données codées de renseignement (D) transmises depuis le serveur (3). En variante, si aucun élément de programme n'est détecté à l'issue de l'étape (23) de détection, le code d'enregistrement (2) peut être immédiatement effacé des moyens de stockage (M) ou effacé à l'issue d'une autre étape de détection effectuée après une nouvelle réception de données codées de renseignement (D).

L'étape (23) de détection permet de déclencher la programmation d'un ou plusieurs éléments de programme détectés. L'ensemble des séquences (6) des données de renseignement (D) peut être effacé des moyens de stockage (M) lorsque l'étape (23) de détection a été réalisée pour toutes les séquences de concaténation (6). En variante, les séquences (6) non discriminées peuvent être supprimées une par une au cours de l'étape (23) de détection.

Dans un mode de réalisation de l'invention, le code d'enregistrement (2) peut comprendre des indications des horaires de début et de fin de l'élément de programme. La première étape (20) de programmation comprend ainsi la saisie d'une plage horaire d'enregistrement, l'interface de saisie (13) étant agencée pour permettre à l'utilisateur de paramétrer à la minute près un début et une fin pour un type de programme. L'étape (23) de détection comprend alors la discrimination de l'ensemble formé par les première et seconde parties (61, 62) de la séquence de concaténation (6). Dans une variante de réalisation, la discrimination est réalisée en éliminant les éléments de programmes diffusés en dehors de la plage horaire paramétrée par l'utilisateur.

La première étape (20) de programmation peut également comprendre une mise en priorité d'au moins une caractéristique relative au type de programme à enregistrer. Un module de gestion des priorités d'enregistrement est par exemple intégré dans les moyens de traitement (12). Un tel module de gestion permet aussi d'éviter des répétitions d'enregistrements pour des éléments de programme diffusés plusieurs fois à des horaires différents. Autrement dit le module de gestion des priorités d'enregistrement permet d'éviter le conflit entre parties codées (61) redondantes, par exemple en supprimant les séquences de concaténation (6) ayant des données identiques - à l'exception des données de plage horaire - à une séquence de concaténation déjà détectée lors de l'étape (23) de détection.

Le processus de diffusion des données de renseignement (D) peut comporter une étape de cryptage des séquences (6) transmises sur le canal de diffusion CBCH, et une étape de décryptage de ces séquences (6) par les moyens de réception et lecture (10) de l'équipement terminal (100). Le serveur (3) comprend par exemple des moyens de cryptage des données de façon à émettre les séquences de concaténation de façon non "lisible" sur le réseau (5) de radiotéléphonie mobile. Dans un mode de réalisation de l'invention, l'équipement terminal (100) de programmation comprend des moyens de décryptage de ces données (D) envoyées par le serveur (3) et de cryptage pour l'envoi de codes d'enregistrements (2) vers des moyens de stockage et d'indexation du serveur. Ce dernier comprend des moyens de décryptage pour la réception des codes (2).

Un des avantages de l'invention est de fournir une application entre un réseau et un appareil d'enregistrement, permettant à l'utilisateur de paramétrer son appareil de manière simple, avec un code d'enregistrement, sans cognition préalable d'indications horaires précises des émissions, programme, ou canaux de diffusion, qu'il souhaite enregistrer. Ce sont les données incluses dans les messages transmis qui fournissent les paramètres nécessaires à la programmation automatique du dispositif enregistreur.

Un autre des avantages de l'invention réside dans l'utilisation de la technologie de diffusion par cellule "Cell Broadcast", plus efficace qu'une diffusion de messages texte classiques SMS s'il y a plusieurs milliers de dispositifs enregistreurs à cibler. En outre, la diffusion peut s'effectuer en temps réel.

Il est également important de noter que, dans le mode préféré de réalisation de l'invention, l'activation du canal de réception SMS-CB sur la carte SIM constituant le module d'identité (SIM) ne peut être effectuée manuellement sur une carte SIM existante (cette carte SIM existante pouvant ensuite être insérée dans l'appareil récepteur de l'enregistreur). L'opérateur ne peut gérer les droits d'activation ou de désactivation d'un canal CB sur carte SIM insérée dans une Station Mobile, le client ayant accès grâce à l'interface de saisie de sa station mobile à l'activation ou à la désactivation des canaux (principe de «l'opt-in»). La technique retenue dans le mode préféré de réalisation de l'invention est l'activation et la désactivation à distance («Over The Air») sur la carte SIM du canal de réception SMS-CB, en fonction de la validité de l'abonnement de l'utilisateur.

En outre et de manière avantageuse, selon la présente invention il est possible de remonter les codes de programmation des utilisateurs, sur l'interface de programmation de l'enregistreur, vers une base de données opérateur, via un SMS-MO («Mobile Originated»). En d'autres termes, les codes d'enregistrements (2) programmés stockés dans l'équipement terminal (100) de programmation sont envoyés sur un canal SMS du réseau (5) de radiotéléphonie mobile, vers une base de données de connaissance à usage statistique. Le serveur (3) comprend par exemple des moyens de stockage et d'indexation des codes d'enregistrements (2) de programmes ainsi émis par les équipements terminaux (100) de programmation. Un intérêt d'une telle base opérateur est de favoriser la connaissance effective ou statistique relative aux programmes et émissions enregistrés, comme par exemple la connaissance du taux d'enregistrement d'une émission.

En terme de mesure «médiamétrique», cette acquisition est effectivement et réellement d'un gros intérêt. Par exemple les annonceurs pourraient s'apercevoir du faible intérêt à communiquer sur un événementiel (date de validité de la publicité très réduite) sur des créneaux horaires tardifs, les émissions nocturnes étant les plus enregistrées et lorsque que le client les regarde, par exemple dans la semaine qui suit, la publicité bien souvent alors périmée n'est plus d'un très grand intérêt. A contrario, pour une audience «médiamétrique» très faible, un fort taux d'enregistrement peut s'avérer un facteur intéressant pour le producteur du programme qui sera en mesure de renégocier avec son diffuseur l'heure de programmation de l'émission ou de revoir le contenu afin de l'adapter au public présent dans la tranche horaire de diffusion de son programme.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de programmation d'enregistrements pour un dispositif enregistreur (1) contenant un support capable d'enregistrer des informations vidéo (14) et relié à un équipement terminal de programmation situé dans une zone déterminée couverte par une ou plusieurs cellules radio (50) d'au moins un réseau (5) de radiotéléphonie mobile, procédé **caractérisé en ce qu'**il comporte les étapes suivantes :
- une première étape (20) de programmation réalisée par un utilisateur comprenant la saisie d'au moins un type de programme à enregistrer à l'aide d'une interface de saisie (13) du dispositif enregistreur (1) reliée à l'équipement terminal (100), le type de programme étant encodé avec un format déterminé en un code d'enregistrement (2) par des moyens de codage de l'équipement terminal (100) de programmation ;
- une étape de mémorisation (21) du code d'enregistrement (2) dans des moyens de stockage (M) de l'équipement terminal (100) de programmation ;
- une étape (22) de réception, par des moyens de réception et de lecture (10) de l'équipement terminal (100), de données codées (D) représentatives d'un planning de programmation d'éléments de programme d'une pluralité de diffuseurs de programmes et d'informations d'identification desdits éléments de programme, transmises sur au moins un canal de diffusion dudit réseau (5) de radiotéléphonie mobile à l'intérieur de ladite zone déterminée dans des messages texte, chacun des éléments de programme étant défini par au moins une séquence de concaténation (6) comprenant au moins une première partie (61) codée avec le format du code d'enregistrement et une seconde partie complémentaire (62) ;
- une étape (23) de détection d'au moins un élément de programme désiré, consistant à discriminer parmi la pluralité de premières parties (61) codées au moins une première partie similaire au code d'enregistrement (2) ;
- une deuxième étape (24) de programmation réalisée automatiquement par l'équipement terminal (100), utilisant la première partie (61) discriminée et/ou sa seconde partie complémentaire (62) pour paramétrer dans le dispositif enregistreur (1) l'enregistrement de l'élément de programme détecté.

2. Procédé de programmation d'enregistrements selon la revendication 1 ou 2, dans lequel la saisie par l'utilisateur du type de programme forme une séquence concaténant notamment les données suivantes :
- des données représentatives d'une catégorie (611) d'élément de programme comprenant une chaîne d'au moins trois caractères,
- des données représentatives d'un genre (612) d'élément de programme comprenant une chaîne d'au moins deux caractères,
- des données représentatives d'un sous-genre (613) d'élément de programme comprenant une chaîne d'au moins deux caractères.

3. Procédé de programmation d'enregistrements selon la revendication 2, dans lequel la séquence formée lors de la saisie par l'utilisateur du type de programme comprend en outre des données représentatives d'un canal de diffusion (204) d'un diffuseur de programmes formées avec au moins deux caractères.

4. Procédé de programmation d'enregistrements selon l'une quelconque des revendications 1 à 3, dans lequel la première partie (61) codée des données d'un élément de programme comprend des données représentatives d'une catégorie (611), d'un genre (612), d'un sous-genre (613) d'élément de programme, et d'un canal de diffusion (614) d'un diffuseur de programmes, la deuxième partie complémentaire (62) comprenant des données représentatives d'une date, d'un horaire de début et de fin de la diffusion de l'élément de programme.

5. Procédé de programmation d'enregistrements selon l'une quelconque des revendications 1 à 4, dans lequel les données codées sont transmises depuis un serveur (3) connecté au réseau de radiotéléphonie mobile (5) et diffusées dans des messages texte de type SMS-CB sur un canal descendant de diffusion CBCH dudit réseau (5).

6. Procédé de programmation d'enregistrements selon l'une quelconque des revendications 1 à 5, dans lequel l'étape (23) de détection comprend la discrimination de l'ensemble formé par les première et seconde parties (61, 62).

7. Procédé de programmation d'enregistrements selon l'une quelconque des revendications 1 à 6, dans lequel une étape de blocage d'accès au canal de diffusion du réseau de radiotéléphonie mobile (5) est réalisée d'une part par identification dans l'équipement terminal (100) de programmation d'un module d'identité (SIM) constitué d'une carte à puce de type SIM ou USIM pour réseaux de deuxième ou troisième génération ou une carte équivalente comportant dans une mémoire des données paramétrables d'autorisation d'accès audit canal de diffusion, et d'autre part par modification desdites données d'autorisation d'accès.

8. Procédé de programmation d'enregistrements selon l'une quelconque des revendications 5 à 7, **caractérisé en ce qu'**il comporte une étape de cryptage des données transmises sur le canal de diffusion CBCH et de décryptage de ces données par les moyens de réception et lecture (10) de l'équipement terminal (100).

9. Procédé de programmation d'enregistrements selon l'une quelconque des revendications 1 à 8, dans lequel la première étape (20) de programmation comprend en outre la saisie d'une plage horaire d'enregistrement.

10. Procédé de programmation d'enregistrements selon l'une quelconque des revendications 1 à 9, dans lequel la première étape (20) de programmation comprend une mise en priorité d'au moins une caractéristique relative au type de programme à enregistrer.

11. Procédé de programmation d'enregistrements selon l'une quelconque des revendications 1 à 10, dans lequel les codes d'enregistrements (2) programmés stockés dans l'équipement terminal (100) de programmation sont envoyés sur un canal SMS du réseau (5) de radiotéléphonie mobile, vers une base de données de connaissance à usage statistique.

12. Système de programmation d'enregistrements pour un dispositif enregistreur (1) contenant un support capable d'enregistrer des informations vidéo (14) et relié à un équipement terminal (100) de programmation, **caractérisé en ce qu'**il comporte un serveur (3) comprenant des moyens de mémorisation (30) pour stocker une base de données codées représentatives d'un planning de programmation d'éléments de programme d'une pluralité de diffuseurs de programmes et d'informations d'identification desdits éléments de programme, le serveur (3) comprenant également des moyens de connexion à au moins un réseau de radiotéléphonie mobile (5) pour diffuser dans au moins un message texte des données (D) codées de ladite base de données sur au moins un canal de diffusion du réseau (5), ledit équipement terminal (100) comprenant des moyens de réception et lecture (10) pour lire les messages texte transmis sur ledit canal diffusant les données (D) codées du serveur (3), chacun des éléments de programme étant défini par au moins une séquence de concaténation (6) codée par un système de transformation de référence et formant une première partie (61) codée avec un format déterminé et une seconde partie complémentaire (62) ; et **en ce que** le dispositif enregistreur (1) comprend une interface de saisie (13) reliée à l'équipement terminal (100) pour permettre à l'utilisateur de rentrer un type de programme à enregistrer, l'équipement terminal (100) comportant des moyens de codage pour encoder le type de programme avec ledit format déterminé en un code d'enregistrement (2) et des moyens de stockage (M) pour mémoriser le code d'enregistrement (2), des moyens de traitement (12) de l'équipement terminal (100) comprenant un module de discrimination pour détecter au moins un élément de programme désiré par comparaison au moins d'une première partie (61) de chacune des séquences de concaténation (6) des messages texte avec le code d'enregistrement (2) et des moyens de paramétrage automatique utilisant la première partie discriminée et/ou sa seconde partie complémentaire pour paramétrer dans le dispositif enregistreur (1) l'enregistrement de l'élément de programme détecté.

13. Système de programmation d'enregistrements selon la revendication 12, dans lequel le réseau de radiotéléphonie mobile (5) comprend un sous-système radio relié au serveur (3) et à au moins un canal descendant de diffusion CBCH dudit réseau pour diffuser les données de ladite base de données dans au moins un message texte de type SMS-CB dans une zone déterminée couverte par une ou plusieurs cellules radio (50) du réseau (5).

14. Système de programmation d'enregistrements selon la revendication 12 ou 13, dans lequel la base de données comporte des données codées (D) d'élément de programme ayant une première partie (61) codée contenant des informations représentatives d'une catégorie (611), d'un genre (612), d'un sous-genre (613) d'élément de programme, d'un canal de diffusion (614) d'un diffuseur de programmes, et une deuxième partie complémentaire (62) contenant des informations représentatives d'une date, d'un horaire de début et de fin de la diffusion de l'élément de programme.

15. Système de programmation d'enregistrements selon l'une quelconque des revendications 12 à 14, dans lequel ledit format déterminé comprend une séquence concaténant notamment des données représentatives de catégorie, de genre et de sous-genre d'un élément de programme, ainsi que des données représentatives d'un canal de diffusion d'un diffuseur de programmes.

16. Système de programmation d'enregistrements selon l'une quelconque des revendications 12 à 15, dans lequel l'équipement terminal (100) de programmation comporte un module d'identité (SIM) constitué d'une carte à puce de type SIM ou USIM pour réseaux de deuxième ou troisième génération ou une carte équivalente comportant dans une mémoire des données paramétrables d'autorisation d'accès audit canal de diffusion du réseau (5).

17. Système de programmation d'enregistrements selon l'une quelconque des revendications 12 à 16, dans lequel les moyens de réception et lecture (10) comportent une antenne d'émission/réception permettant d'envoyer les codes d'enregistrements (2) sur un canal SMS du réseau (5), le serveur (3) comprenant des moyens de stockage et d'indexation des codes d'enregistrements (2) de programmes émis par les équipements terminaux (100) de programmation.

18. Système de programmation d'enregistrements selon la revendication 17, dans lequel le serveur (3) comprend des moyens de cryptage/décryptage pour permettre le cryptage des données (D) à émettre sur le réseau (5), tandis que l'équipement terminal (100) de programmation comprend des moyens de décryptage de ces données (D) et de cryptage pour l'envoi des codes d'enregistrements (2) vers les moyens de stockage et d'indexation du serveur.

19. Equipement terminal (100) de programmation destiné à programmer au moins un déclenchement d'un dispositif enregistreur (1) pour enregistrer une émission diffusée sur le canal de diffusion d'un diffuseur de programmes, comprenant des moyens de traitement (12) et des moyens de stockage (M), **caractérisé en ce qu'**il comporte :
- des moyens de réception et de lecture (10) aptes à recevoir des messages texte transmis sur au moins un canal de diffusion d'un réseau de radiotéléphonie mobile (5) et lire une pluralité de séquences de concaténation (6) contenues dans les messages texte, chacune représentative d'une identification et d'un planning de programmation d'un élément de programme d'un diffuseur de programmes ;
- des moyens de connexion à une interface de saisie (13) du dispositif enregistreur (1) permettant à l'utilisateur de choisir un type de programme à enregistrer ;
- des moyens de codage pour encoder le type de programme choisi avec un format déterminé en un code d'enregistrement (2), lesdits moyens de stockage (M) mémorisant le code d'enregistrement (2) ;
- un module de discrimination dans les moyens de traitement (12) pour détecter un élément de programme à enregistrer par identification, parmi la pluralité de séquences de concaténation (6) lues par les moyens de réception et de lecture (10), d'au moins une partie codée (61) avec ledit format déterminé dans une séquence de concaténation (6) et comparaison de cette partie codée (61) avec le code d'enregistrement (2) ;
- des moyens de paramétrage automatique utilisant la partie codée (61) discriminée et/ou une partie complémentaire (62) dans la même séquence de concaténation (6) pour paramétrer dans le dispositif enregistreur (1) le début et la fin de l'enregistrement ainsi que le canal de diffusion de l'élément de programme détecté par le module de discrimination.

20. Equipement selon la revendication 19, dans lequel les moyens de réception et lecture (10) comprennent une antenne de d'émission/réception (11) compatible avec un réseau de radiotéléphonie mobile de type GSM, GRPS, UMTS ou analogue et des moyens d'accès à un canal descendant de diffusion CBCH dudit réseau (5) pour permettre la lecture d'au moins un message texte de type SMS-CB d'une part, et des moyens d'accès aux canaux SMS pour permettre un envoi des codes d'enregistrements (2) vers une base de données de connaissance à usage statistique d'autre part.

21. Equipement selon la revendication 19 ou 20, dans lequel les moyens de réception et de lecture (10) comportent un module d'identité (SIM) constitué d'une carte à puce de type SIM ou USIM pour réseaux de deuxième ou troisième génération ou une carte équivalente comportant dans une mémoire des données paramétrables d'autorisation d'accès audit canal de diffusion du réseau (5).

22. Equipement selon l'une quelconque des revendications 19 à 21, dans lequel les moyens de réception et lecture (10) comprennent des moyens de décryptage des séquences de concaténation (6).

23. Equipement selon l'une quelconque des revendications 19 à 22, dans lequel le module de discrimination comprend des moyens de comparaison de données respectivement représentatives du canal de diffusion, d'une catégorie, et d'au moins une classification par genre de l'élément de programme, les moyens de stockage (M) étant agencés pour stocker dans un registre la séquence de concaténation (6) comprenant une partie codée (61) avec ledit format déterminé dont les données comparées par les moyens de comparaison sont identiques à celles du code d'enregistrement (2), les moyens de paramétrage automatique étant reliés aux moyens de stockage (M) pour utiliser des données d'enregistrement de la séquence (6) stockée dans ledit registre.

## Claims

1. Method of programming recordings for a recording device (1) containing a medium capable of recording video information (14) and connected to programming terminal equipment located in a predetermined zone covered by one or more radio cells (50) of at least one mobile radiotelephony network (5), the method being **characterised in that** it includes the following steps:
- a first programming step (20) carried out by a user comprising the capture of at least one type of programme to be recorded using a capture interface (13) of the recording device (1) connected to the terminal equipment (100), the programme type being encoded with a predetermined format in a recording code (2) by coding means of the programming terminal equipment (100);
- a step of storing (21) the recording code (2) in storage means (M) of the programming terminal equipment (100);
- a step (22) of receiving, via reception and reading means (10) of the terminal equipment (100), coded data (D) representing a programming schedule for programme elements of a plurality of programme broadcasters and identification information on said programme elements, transmitted over at least one broadcast channel of said mobile radiotelephony network (5) within said predetermined zone in text messages, each of the programme elements being defined by at least one concatenation sequence (6) comprising at least one first part (61) coded with the format of the recording code and a second complementary part (62);
- a step (23) of detecting at least one desired programme element, consisting in discriminating, from among the plurality of first coded parts (61), at least one first part similar to the recording code (2);
- a second programming step (24) carried out automatically by the terminal equipment (100), using the first discriminated part (61) and/or its second complementary part (62) in order to parameterise in the recording device (1) the recording of the programme element detected.

2. Method of programming recordings according to Claim 1 or 2, in which the capture by the user of the programme type forms a sequence concatenating the following data in particular:
- data representing a programme element category (611) comprising a string of at least three characters,
- data representing a programme element genre (612) comprising a string of at least two characters,
- data representing a programme element sub-genre (613) comprising a string of at least two characters.

3. Method of programming recordings according to Claim 2, in which the sequence formed during the capture by the user of the programme type further comprises data representing a broadcast channel (204) of a programme broadcaster formed with at least two characters.

4. Method of programming recordings according to any one of Claims 1 to 3, in which the first coded part (61) of the data of a programme element comprises data representing a category (611), a genre (612), a sub-genre (613) of a programme element, and a broadcast channel (614) of a programme broadcaster, the second complementary part (62) comprising data representing a date, a schedule for the start and end of broadcasting of the programme element.

5. Method of programming recordings according to any one of Claims 1 to 4, in which the coded data are transmitted from a server (3) connected to the mobile radiotelephony network (5) and are broadcast as SMS-CB-type text messages on a downlink broadcast channel CBCH of said network (5).

6. Method of programming recordings according to any one of Claims 1 to 5, in which the detection step (23) comprises the discrimination of the assembly formed by the first and second parts (61, 62).

7. Method of programming recordings according to any one of Claims 1 to 6, in which a step of blocking access to the broadcast channel of the mobile radiotelephony network (5) is performed on the one hand by identification in the programming terminal equipment (100) of an identity module (SIM) constituted by a SIM- or USIM-type smart card for second- or third-generation networks or an equivalent card including, in a memory, parameterisable data authorising access to said broadcast channel, and on the other hand by modification of said access authorisation data.

8. Method of programming recordings according to any one of Claims 5 to 7, **characterised in that** it includes a step of encrypting the data transmitted over the broadcast channel CBCH and of decrypting these data by the reception and reading means (10) of the terminal equipment (100).

9. Method of programming recordings according to any one of Claims 1 to 8, in which the first programming step (20) further comprises the capture of a recording time-slot.

10. Method of programming recordings according to any one of Claims 1 to 9, in which the first programming step (20) comprises prioritising of at least one characteristic relating to the type of programme to be recorded.

11. Method of programming recordings according to any one of Claims 1 to 10, in which the programmed recording codes (2) stored in the programming terminal equipment (100) are sent over an SMS channel of the mobile radiotelephony network (5), to a knowledge data base for statistical use.

12. System of programming recordings for a recording device (1) containing a medium capable of recording video information (14) and connected to programming terminal equipment (100), **characterised in that** it includes a server (3) comprising storage means (30) for storing a data base of coded data representing a programming schedule for programme elements of a plurality of programme broadcasters and information identifying said programme elements, the server (3) also comprising means of connection to at least one mobile radiotelephony network (5) for broadcasting, in at least one text message, coded data (D) of said data base over at least one broadcast channel of the network (5), said terminal equipment (100) comprising reception and reading means (10) for reading the text messages transmitted over said channel broadcasting the coded data (D) of the server (3), each of the programme elements being defined by at least one concatenation sequence (6) coded by a reference transformation system and forming a first part (61) coded with a predetermined format and a second complementary part (62); and **in that** the recording device (1) comprises a capture interface (13) connected to the terminal equipment (100) in order to allow the user to enter a type of programme to be recorded, the terminal equipment (100) including coding means for encoding the programme type with said predetermined format in a recording code (2) and storage means (M) for storing the recording code (2), processing means (12) of the terminal equipment (100) comprising a discrimination module for detecting at least one desired programme element by comparing at least one first part (61) of each of the concatenation sequences (6) of the text messages with the recording code (2) and automatic parameterisation means using the first discriminated part and/or its second complementary part in order to parameterise, in the recording device (1), the recording of the programme element detected.

13. System of programming recordings according to Claim 12, in which the mobile radiotelephony network (5) comprises a radio subsystem connected to the server (3) and at least one downlink broadcasting channel CBCH of said network, for broadcasting the data in said data base in at least one SMS-CB-type text message in a predetermined zone covered by one or more radio cells (50) of the network (5).

14. System for programming recordings according to Claim 12 or 13, in which the data base includes coded programme element data (D) having a first coded part (61) containing information representing a category (611), a genre (612), a sub-genre (613) of a programme element, of a broadcast channel (614) of a programme broadcaster, and a second complementary part (62) containing information representing a date, a schedule for the start and end of broadcasting of the programme element.

15. System for programming recordings according to any one of Claims 12 to 14, in which said predetermined format comprises a sequence concatenating, for instance, data representing the category, genre and sub-genre of a programme element, together with data representing a broadcast channel of a programme broadcaster.

16. System for programming recordings according to any one of Claims 12 to 15, in which the programming terminal equipment (100) includes an identity module (SIM) constituted by a SIM- or USIM-type smart card for second- or third-generation networks or an equivalent card including, in a memory, parameterisable data authorising access to said broadcast channel of the network (5).

17. System for programming recordings according to any one of Claims 12 to 16, in which the reception and reading means (10) comprise a transmit-receive antenna making it possible to send the recording codes (2) over an SMS channel of the network (5), the server (3) comprising means for storing and indexing the recording codes (2) of programmes sent by the programming terminal equipment (100).

18. System for programming recordings according to Claim 17, in which the server (3) comprises encryption/decryption means for allowing the encryption of the data (D) to be transmitted over the network (5), while the programming terminal equipment (100) comprises means for decrypting these data (D) and for encryption in order to send the recording codes (2) to the storage and indexing means of the server.

19. Programming terminal equipment (100) intended for programming at least one triggering of a recording device (1) for recording a broadcast transmitted over the broadcast channel of a programme broadcaster, comprising processing means (12) and storage means (M), **characterised in that** it includes:
- reception and reading means (10) capable of receiving text messages transmitted over at least one broadcast channel of a mobile radiotelephony network (5) and reading a plurality of concatenation sequences (6) contained in the text messages, each representing an identification and a programming schedule for a programme element of a programme broadcaster;
- means for connecting the recording device (1) to a capture interface (13) allowing the user to choose a type of programme to be recorded;
- coding means for encoding the chosen programme type with a predetermined format in a recording code (2), said storage means (M) storing the recording code (2);
- a discrimination module in the processing means (12) for detecting a programme element to be recorded by identification, from among the plurality of concatenation sequences (6) read by the reception and reading means (10), of at least one part (61) coded with said predetermined format in a concatenation sequence (6) and comparison of this part (61) coded with the recording code (2);
- automatic parameterisation means using the discriminated coded part (61) and/or a complementary part (62) in the same concatenation sequence (6) for parameterising, in the recording device (1), the beginning and end of the recording together with the broadcast channel of the programme element detected by the discrimination module.

20. Equipment according to Claim 19, in which the reception and reading means (10) comprise a transmit-receive antenna (11) compatible with a mobile radiotelephony network of GSM, GRPS, UMTS or similar type and means of access to a downlink broadcast channel CBCH of said network (5) in order to allow the reading of at least one SMS-CB-type text message on the one hand, and means of access to SMS channels to allow the recording codes (2) to be sent to a knowledge data base for statistical use on the other hand.

21. Equipment according to Claim 19 or 20, in which the reception and reading means (10) include an identity module (SIM) constituted by a SIM- or USIM-type smart card for second- or third-generation networks or an equivalent card including, in a memory, parameterisable data authorising access to said broadcast channel of the network (5).

22. Equipment according to any one of Claims 19 to 21, in which the reception and reading means (10) comprise means for decrypting the concatenation sequences (6).

23. Equipment according to any one of Claims 19 to 22, in which the discrimination module comprises means for comparing data respectively representing the broadcast channel, a category, and at least one classification per genre of the programme element, the storage means (M) being set up for storing, in a register, the concatenation sequence (6) comprising a part (61) coded with said predetermined format, of which the data compared by the comparison means are identical to those of the recording code (2), the automatic parameterisation means being connected to the storage means (M) in order to use recording data of the sequence (6) stored in said register.

## Patentansprüche

1. Verfahren zur Programmierung von Aufnahmen für ein Aufnahmegerät (1), einen zur Aufnahme von Videoinformationen geeigneten Träger (14) enthaltend und mit einem Programmierungsendgerät verbunden, das sich in einem bestimmten Bereich befindet, der von einer oder mehreren Funkzellen (50) mindestens eines Mobilfunktelephonnetzes (5) versorgt wird, Verfahren, **dadurch gekennzeichnet, dass** es die folgenden Schritte umfasst:
- einen ersten Programmierungsschritt (20), der von einem Benutzer ausgeführt wird, die Eingabe mindestens einer aufzunehmenden Programmart mit Hilfe einer Eingabeschnittstelle (13) des Aufnahmegerätes (1) umfassend, die mit dem Endgerät (100) verbunden ist, wobei die Programmart durch Codierungsmittel des Programmierungsendgeräts (100) in einem bestimmten Format in einem Aufnahmecode (2) codiert wird;
- einen Schritt der Speicherung (21) des Aufnahmecodes (2) in Speichermitteln (M) des Programmierungsendgerätes (100);
- einen Schritt (22) des Empfangs codierter Daten (D) durch Empfangs- und Lesemittel (10) des Endgerätes (100), die einem Programmierungsplan von Programmelementen mehrerer Programmsendeanstalten und Informationen zur Identifizierung der genannten Programmelemente entsprechen, die auf mindestens einem Ausstrahlungskanal des genannten Mobilfunktelephonnetzes (5) innerhalb des genannten bestimmten Bereiches in Textmeldungen übertragen werden, wobei jedes der Programmelemente durch mindestens eine Verkettungssequenz (6) definiert ist, die mindestens einen ersten, im Format des Aufnahmecodes codierten Teil (61) umfasst und einen zweiten ergänzenden Teil (62);
- einen Schritt (23) der Feststellung mindestens eines gewünschten Programmelementes, darin bestehend, aus der Vielzahl erster codierter Teile (61) mindestens einen ersten Teil auszuwählen, der dem Aufnahmecode (2) ähnelt;
- einen zweiten Programmierungsschritt (24), der automatisch vom Endgerät (100) ausgeführt wird, der den ausgewählten ersten Teil (61) und/oder seinen zweiten ergänzenden Teil (62) verwendet, um im Aufnahmegerät (1) die Aufnahme des festgestellten Programmelementes zu ***parametrieren.

2. Verfahren zur Programmierung von Aufnahmen nach Patentanspruch 1, in dem die Eingabe der Programmart eine Sequenz bildet, die insbesondere die folgenden Daten verkettet:
- Daten, die eine Kategorie (611) von Programmelementen darstellen, die eine Kette von mindestens drei Zeichen umfassen,
- Daten, die eine Gattung (612) von Programmelementen darstellen, die eine Kette von mindestens zwei Zeichen umfassen,
- Daten, die eine Untergattung (613) von Programmelementen darstellen, die eine Kette von mindestens zwei Zeichen umfassen.

3. Verfahren zur Programmierung von Aufnahmen nach Patentanspruch 2, in dem die bei der Eingabe der Programmart durch den Benutzer gebildete Sequenz außerdem Daten umfasst, die einem Ausstrahlungskanal (204) einer Programmsendeanstalt entsprechen, die aus mindestens zwei Zeichen gebildet werden.

4. Verfahren zur Programmierung von Aufnahmen nach irgendeinem der Patentansprüche 1 bis 3, in dem der erste codierte Teil (61) der Daten eines Programmelementes Daten umfasst, die einer Kategorie (611), einer Gattung (612), einer Untergattung (613) des Programmelementes und einem Ausstrahlungskanal (614) einer Programmsendeanstalt entsprechen, während der zweite ergänzende Teil (62) Daten umfasst, die einem Datum, einem Anfangs- und einem Endzeitpunkt der Ausstrahlung des Programmelementes entsprechen.

5. Verfahren zur Programmierung von Aufnahmen nach irgendeinem der Patentansprüche 1 bis 4, in dem die codierten Daten von einem Server (3) übertragen werden, der an das Mobiltelephonnetz (5) angschlossen ist, und in Textmeldungen vom Typ SMS-CB über einen CBCH-Abwärtsausstrahlungskanal des genannten Netzes (5) ausgestrahlt werden.

6. Verfahren zur Programmierung von Aufnahmen nach irgendeinem der Patentansprüche 1 bis 5, in dem der Erfassungsschritt (23) die Auswahl der Einheit aus den ersten und zweiten Teilen (61, 62) umfasst.

7. Verfahren zur Programmierung von Aufnahmen nach irgendeinem der Patentansprüche 1 bis 6, in dem ein Schritt der Zugangssperrung zum Ausstrahlungskanal des Mobilfunktelephonnetzes (5) einerseits durch Identifizierung eines Kennungsmoduls (SIM) im Programmierungsendgerät (100), bestehend aus einer Chipkarte vom Typ SIM oder USIM für Netze der zweiten oder dritten Generation oder einer äquivalenten Karte, die in einem Speicher parametrierbare Daten zur Zugangsgewährung zum genannten Ausstrahlungskanal enthält, erfolgt und andererseits durch Änderung der genannten Zugangsgewährungsdaten.

8. Verfahren zur Programmierung von Aufnahmen nach irgendeinem der Patentansprüche 5 bis 7, **dadurch gekennzeichnet, dass** es einen Schritt der Verschlüsselung der auf dem CBCH-Ausstrahlungskanal übertragenen Daten umfasst und der Entschlüsselung dieser Daten durch die Empfangs- und Lesemittel (10) des Endgerätes (100).

9. Verfahren zur Programmierung von Aufnahmen nach irgendeinem der Patentansprüche 1 bis 8, in dem der erste Programmierschritt (20) außerdem die Eingabe eines Aufnahmezeitraumes umfasst.

10. Verfahren zur Programmierung von Aufnahmen nach irgendeinem der Patentansprüche 1 bis 9, in dem der erste Programmierschritt (20) das Festsetzen einer Priorität mindestens eines Merkmals umfasst, das sich auf die zu speichernde Programmart bezieht.

11. Verfahren zur Programmierung von Aufnahmen nach irgendeinem der Patentansprüche 1 bis 10, in dem die programmierten Aufnahmecodes (2), die im Programmierungsendgerät (100) gespeichert sind, durch einen SMS-Kanal des Mobilfunktelephonnetzes (5) an eine Wissensdatenbank für statistische Zwecke gesendet werden.

12. System zur Programmierung von Aufnahmen für ein Aufnahmegerät (1), einen zur Aufnahme von Videoinformationen geeigneten Träger (14) enthaltend und mit einem Programmierungsendgerät (100) verbunden, **dadurch gekennzeichnet, dass** es einen Server (3) umfasst, der Speichermittel (30) zur Speicherung einer Bank codierter Daten umfasst, die einem Programmierungsplan von Programmelementen mehrerer Programmsendeanstalten und Informationen zur Identifizierung der genannten Programmelemente entsprechen, wobei der Server (3) ebenfalls über Mittel zur Verbindung mit mindestens einem Mobilfunktelephonnetz (5) verfügt, um in mindestens einer Textmeldung codierte Daten (D) der genannten Datenbank über mindestens einen Ausstrahlungskanal des Netzes (5) auszustrahlen, wobei das genannte Endgerät (100) Empfangs- und Lesemittel (10) zum Lesen der Textmeldungen aufweist, die über den genannten Kanal übertragen werden, der die codierten Daten (D) des Servers (3) ausstrahlt, wobei jedes der Programmelemente durch mindestens eine Verkettungssequenz (6) definiert ist, die von einem System zur Referenzumwandlung codiert wurde und einen ersten codierten Teil (61) in einem festgelegten Format aufweist und einen zweiten Ergänzungsteil (62), und dadurch, dass das Aufnahmegerät (1) eine Eingabeschnittstelle (13) umfasst, die mit dem Endgerät (100) verbunden ist, um dem Benutzer die Eingabe einer aufzunehmenden Programmart zu erlauben, wobei das Endgerät (100) Codierungsmittel umfasst, um die Programmart im genannten festgelegten Format in einem Aufnahmecode (2) zu codieren, und Speichermittel (M) zur Speicherung des Aufnahmecodes (2), Verarbeitungsmittel (12) des Endgerätes (100), die ein Auswahlmodul zur Feststellung mindestens eines gewünschten Programmelementes durch Vergleich mindestens eines ersten Teils (61) jeder der Verkettungssequenzen (6) der Textmeldungen mit dem Aufnahmecode (2) aufweisen und Mittel zur automatischen Parametrierung, die den ersten ausgewählten Teil verwenden und/oder seinen zweiten ergänzenden Teil, um im Aufnahmegerät (1) die Aufnahme des festgestellten Programmelementes zu parametrieren.

13. System zur Programmierung von Aufnahmen nach Patentanspruch 12, in dem das Mobiltelephonnetz (5) ein Funkuntersystem umfasst, das mit dem Server (3) vebunden ist und mit mindestens einem absteigenden CBCH-Ausstrahlungskanal des genannten Netzes, um die Daten der genannten Datenbank in mindestens einer Textmeldung des Typs SMS-CB in einem bestimmten Bereich auszustrahlen, der von einer oder mehreren Funkzellen (50) des Netzes (5) versorgt wird.

14. System zur Programmierung von Aufnahmen nach Patentanspruch 12 oder 13, in dem die Datenbank codierte Daten (D) von Programmelementen enthält, die über einen ersten codierten Teil (61) verfügen, der informationen enthält, die einer Kategorie (611), einer Gattung (612), einer Untergattung (613) eines Programmelementes, einem Ausstrahlungskanal (614) einer Programmsendeanstalt entsprechen, und einen zweiten ergänzenden Teil (62), der informationen enthält, die einem Datum, einem Anfangs- und einem Endzeitpunkt der Ausstrahlung des Programmelementes entsprechen.

15. System zur Programmierung von Aufnahmen nach irgendeinem der Patentansprüche 12 bis 14, in dem das genannte festgelegte Format eine Sequenz umfasst, die insbesondere Daten verkettet, die der Kategorie, der Gattung und der Untergattung eines Programmelementes entsprechen, sowie Daten, die einem Ausstrahlungskanal einer Programmsendeanstalt entsprechen.

16. System zur Programmierung von Aufnahmen nach irgendeinem der Patentansprüche 12 bis 15, in dem das Programmierungsendgerät (100) ein Kennungsmodul (SIM) aufweist, das aus einer Chipkarte vom Typ SIM oder USIM für Netze der zweiten oder dritten Generation besteht oder einer äquivalenten Karte, die in einem Speicher parametrierbare Daten zur Zugangs***kontrolle zum genannten Ausstrahlungskanal des Netzes (5) enthält.

17. System zur Programmierung von Aufnahmen nach irgendeinem der Patentansprüche 12 bis 16, in dem die Empfangs- und Lesemittel (10) eine Sende-/Empfangsantenne umfassen, die erlaubt, die Aufnahmecodes (2) über einen SMS-Kanal des Netzes (5) zu senden, wobei der Server (3) über Speicher- und Indizierungsmittel für die Aufnahmecodes (2) von Programmen verfügt, die von den Programmierungsendgeräten (100) gesendet werden.

18. System zur Programmierung von Aufnahmen nach Patentanspruch 17, in dem der Server (3) Mittel zur Verschlüsselung/Entschlüsselung umfasst, um die Verschlüsselung der Daten (D) zu erlauben, die ins Netz (5) gesandt werden sollen, während das Programmierungsendgerät (100) Mittel zur Entschlüsselung dieser Daten (D) und zur Verschlüsselung für die Übertragung der Aufnahmecodes (2) an die Speicher- und Indizierungsmittel des Servers umfasst.

19. Programmierungsendgerät (100), dazu bestimmt, mindestens ein Starten eines Aufnahmegerätes (1) zu programmieren, um eine Sendung aufzunehmen, die über den Ausstrahlungskanal einer Programmsendeanstalt ausgestrahlt wird, Verarbeitungsmittel (12) enthaltend und Speichermittel (M), **dadurch gekennzeichnet, dass** es umfasst:
- Empfangs- und Lesemittel (10), geeignet, Textmeldungen zu empfangen, die über mindestens einen Ausstrahlungskanal eines Mobilfunktelephonnetzes (5) übertragen werden, und mehrere Verkettungssequenzen (6) zu lesen, die in den Textmeldungen enthalten sind, wobei jede eine Kennung darstellt und eine Programmplanung für ein Programmelement einer Programmsendeanstalt;
- Mittel zum Anschluss an eine Eingabeschnittstelle (13) des Aufnahmegerätes (1), die dem Benutzer erlauben, eine aufzunehmende Programmart auszuwählen;
- Codiermittel zur Codierung der gewählten Programmart in einem festgelegten Format in einem Aufnahmecode (2), wobei die genannten Speichermittel (M) den Aufnahmecode (2) speichern,
- ein Auswahlmodul in den Verarbeitungsmitteln (12) zur Feststellung eines aufzunehmenden Programmelementes durch Identifizierung mindestens eines codierten Teils (61) im genannten festgelegten Format in einer Verkettungssequenz (6) unter der Vielzahl von Verkettungssequenzen (6), die von den Empfangs- und Lesemitteln (10) gelesen wurden, und Vergleich dieses codierten Teils (61) mit dem Aufnahmecode (2);
- Mittel zur automatischen Parametrierung, die den ausgewählten codierten Teil (61) verwenden und/oder einen ergänzenden Teil (62) in derselben Verkettungssequenz (6), um im Aufnahmegerät (1) den Anfang und das Ende der Aufnahme zu parametrieren, sowie den Ausstrahlungskanal des vom Auswahlmodul festgestellten Programmelementes.

20. Ausrüstung nach Patentanspruch 19, in der die Empfangs- und Lesemittel (10) eine Sende-/Empfangsantenne (11) umfassen, die mit einem Mobiltelephonnetz vom Typ GSM, GRPS, UMTS oder ähnlich kompatibel ist, und Mittel für den Zugang zu einem absteigenden CBCH-Ausstrahlungskanal des genannten Netzes (5), um das Lesen mindestens einer Textmeldung vom Typ SMS-CB zu lesen, einerseits und andererseits Mittel für den Zugang zu den SMS-Kanälen, um das Senden der Aufnahmecodes (2) zu einer Wissensdatenbank für statistische Zwecke zu erlauben.

21. Ausrüstung nach Patentanspruch 19 oder 20, in der die Empfangs- und Lesemittel (10) ein Kennungsmodul (SIM) aufweisen, das aus einer Chipkarte vom Typ SIM oder USIM für Netze der zweiten oder dritten Generation besteht oder einer äquivalenten Karte, die in einem Speicher parametrierbare Daten zur Zugangsgewährung zum genannten Ausstrahlungskanal des Netzes (5) enthält.

22. Ausrüstung nach irgendeinem der Patentansprüche 19 bis 21, in der die Empfangs- und Lesemittel (10) Mittel zur Entschlüsselung der Verkettungssequenzen (6) umfassen.

23. Ausrüstung nach irgendeinem der Patentansprüche 19 bis 22, in der das Auswahlmodul Mittel zum Vergleichen von Daten umfasst, die jeweils den Ausstrahlungskanal angeben, eine Kategorie und mindestens eine Gattungsklassifizierung des Programmelementes, wobei die Speichermittel (M) dafür eingerichtet sind, die Verkettungssequenz (6) in einem Register zu speichern, die einen codierten Teil (61) im genannten festgelegten Format umfasst, dessen von den Vergleichsmitteln verglichene Daten mit denen des Aufnahmecodes (2) identisch sind, wobei die Mittel zur automatischen Parametrierung mit den Speichermitteln (M) verbunden sind, um Aufnahmedaten der im genannten Register gespeicherten Sequenz (6) zu verwenden.
